# EUROPEAN PATENT APPLICATION

(11) **EP 4 796 279 A1**
(43) Date of publication of application: **26.08.2026**
(21) Application number: 26159202.6
(22) Date of filing: 18.02.2026
(51) Int. Cl.: B29C 35/02, B29C 45/00, B29C 45/78, B29C 71/02

(54) **METHOD AND MANUFACTURING SYSTEM FOR PRODUCING MOLDED PRODUCT**

(30) Priority: 20.02.2025 JP 2025026112
(71) Applicant: Seiko Epson Corporation, Tokyo 160-8801 (JP)
(72) Inventor: NAKASHIMA, Yoshiki, Suwa-shi, 392-8502 (JP); TANAKA, Hideki, Suwa-shi, 392-8502 (JP); FUKASE, Akio, Suwa-shi, 392-8502 (JP); HIJIKATA, Mami, Suwa-shi, 392-8502 (JP)
(74) Representative: Lewis Silkin LLP

(57) **Abstract**

A method for producing a molded product (M3) includes:
a first step of molding a material containing a cellulose derivative into a molded body (M2), and

a second step of performing temperature control in which a molded product (M3) is produced by maintaining the molded body (M2) produced in the first step within a predetermined temperature range for a predetermined time t,
wherein, when the phase transition point of the molded body is A(°C), the temperature range in the second step is A-10°C or more and A+50°C or less.

## Description

The present application is based on, and claims priority from JP Application Serial Number 2025-026112, filed February 20, 2025, the disclosure of which is hereby incorporated by reference herein in its entirety.

### BACKGROUND

### 1. Technical Field

The present disclosure relates to a method and a manufacturing system for producing a molded product.

### 2. Related Art

Cellulose derivatives have attracted attention in recent years because they are renewable resources, excellent in biocompatibility and degradability, and environmentally friendly materials. In addition, a technique for obtaining a molded body by injection molding a raw material containing the cellulose derivative has attracted particular attention (for example, see JP-A-2018-059125).

JP-A-2018-059125 is an example of the related art.

However, the molded body obtained by injection molding a raw material containing the cellulose derivative is environmentally friendly, but has a problem of insufficient heat resistance and strength.

### SUMMARY

A method for producing a molded product according to an application example of the present disclosure includes:
a first step of molding a material containing a cellulose derivative into a molded body, and
a second step of performing a treatment in which a molded product is produced by maintaining the molded body produced in the first step within a predetermined temperature range for a predetermined time t,
wherein, when the phase transition point of the molded body is A(°C), the temperature range in the second step is A-10°C or more and A+50°C or less.

A manufacturing system according to an application example of the present disclosure includes:
a molding machine configured to mold a material containing a cellulose derivative into a molded body,
a heat-retaining chamber configured to perform a treatment on the molded body molded by the molding unit by maintaining the molded body within a predetermined temperature range for a predetermined time t, and
a conveying machine configured to convey the molded body from the molding unit to the heat-retaining chamber,
wherein, when the phase transition point of the molded body is A (°C), the temperature range is A-10°C or more and A+50°C or less.

### BRIEF DESCRIPTION OF THE DRAWINGS

FIG. 1 is a diagram schematically showing a manufacturing system for executing a method for producing a molded product according to an embodiment of the present disclosure.
FIG. 2 is a graph showing a temporal change of heat absorption of the molded body in a second step.
FIG. 3 is a flowchart for describing an example of a method for producing the molded product of the present disclosure.
FIG. 4 is a table showing manufacturing conditions and evaluation results for each example and each comparative example.

### DESCRIPTION OF EMBODIMENTS

Hereinafter, a method and a manufacturing system for producing a molded product of the present disclosure will be described in detail based on preferred embodiments shown in the accompanying drawings.

### Embodiment

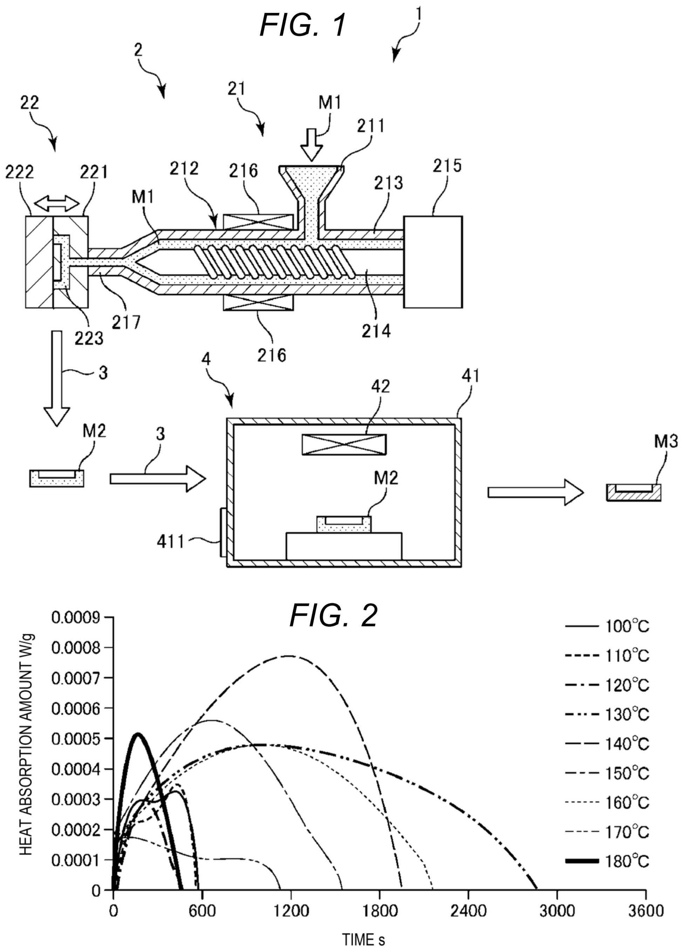

FIG. 1 is a diagram schematically showing a manufacturing system for executing a method for producing a molded product according to an embodiment of the present disclosure.

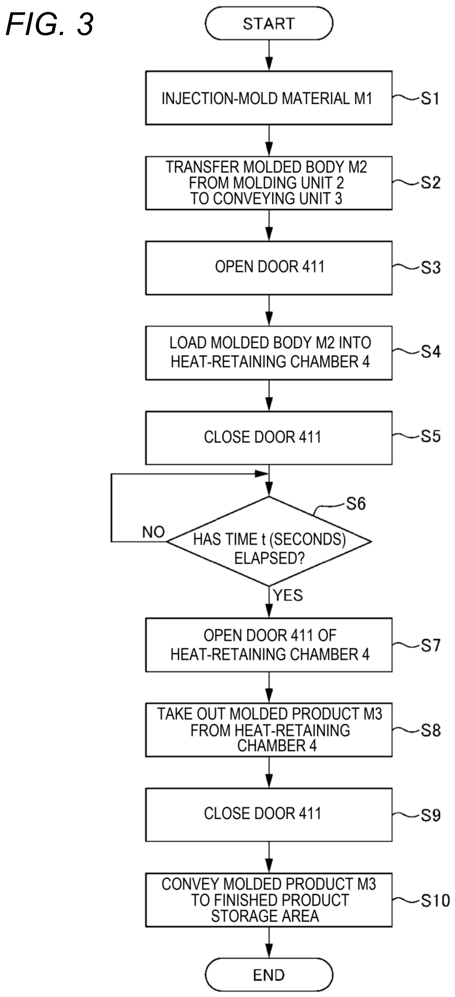

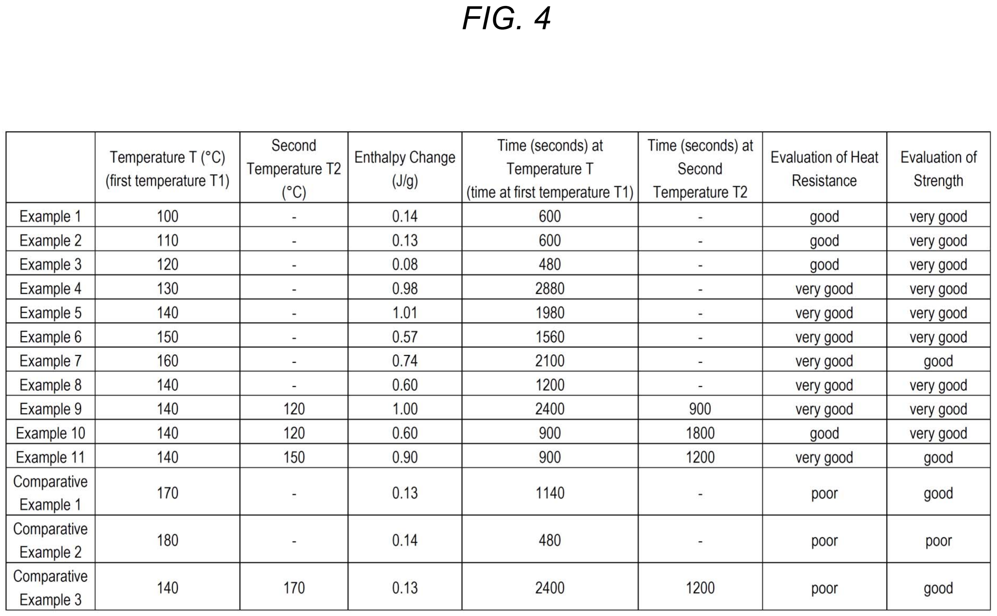

FIG. 2 is a graph showing a temporal change of heat absorption of the molded body in a second step. FIG. 3 is a flowchart for describing an example of a method for producing the molded product of the present disclosure. FIG. 4 is a table showing manufacturing conditions and evaluation results for each example and each comparative example.

### Manufacturing system and method for producing molded product

As shown in FIG. 1, a manufacturing system 1 is a device that executes an example of a method for producing the molded product of the present disclosure, and includes a molding unit 2 (molding machine), a conveying unit 3 (conveying machine), a heat-retaining chamber 4, and a control unit (not shown). The operations of the molding unit 2, the conveying unit 3, and the heat-retaining chamber 4 are controlled by the control unit (not shown). The manufacturing system 1 sequentially executes a molding step (first step), a conveying step, and a treatment step (second step).

The present disclosure may be applied to a manufacturing system in which the molding unit 2, the conveying unit 3, the heat-retaining chamber 4, and the control unit (not shown) are all separate devices, and these are coupled to form one system. In addition, the present disclosure may be applied to a molded body manufacturing system including the molding unit 2 and the control unit without including the conveying unit 3 and the heat-retaining chamber 4.

Hereinafter, the respective components and steps will be described in detail.

### [1] Molding unit and molding step

As shown in FIG. 1, the molding unit 2 is a portion that forms a molded body M2 (molded product M3) by injection molding a material M1 containing a cellulose derivative. The molding unit 2 may be a known injection molding machine. The molding unit 2 includes an injection unit 21 and a mold clamping unit 22. The material M1 will be described in detail later.

### [1- 1] Configuration of molding unit

The injection unit 21 includes a hopper 211 and a cylinder 212. The hopper 211 is a portion that supplies the material M1 to the cylinder 212. The form of the material M1 supplied to the cylinder 212 is not particularly limited, and may include, for example, a powder form or a cotton-like form.

The cylinder 212 includes an outer cylinder 213 to which a hopper 211 is coupled, a screw 214 that rotates in the outer cylinder 213, a motor 215 that rotates the screw 214, and a heater 216 that heats the inside of the outer cylinder 213. The motor 215 and the heater 216 are electrically coupled to the control unit (not shown), and the operation thereof is controlled.

The material M1 supplied into the cylinder 212 via the hopper 211 is plasticized by heating of the heater 216. The plasticized material M1 is extruded from a mouth portion 217 of the outer cylinder 213 by the rotation of the screw 214.

The mold clamping unit 22 includes a fixed mold 221 and a movable mold 222. In a state where the fixed mold 221 and the movable mold 222 are assembled, a cavity 223 is formed therebetween. The plasticized material M1 flows into the cavity 223. Then, the material M1 that has flowed in is pressurized and cooled between the fixed mold 221 and the movable mold 222. As a result, the material M1 in the cavity 223 is cured, and the molded body M2 (primary molded body) is manufactured.

The fixed mold 221 and the movable mold 222 may be configured to have a flow path therein. In this case, cooling can be performed by causing a refrigerant to flow down into the flow path.

When the molded body M2 in the cavity 223 is taken out, the movable mold 222 is separated from the fixed mold 221. The method of separating the movable mold 222 from the fixed mold 221 is not particularly limited, and may include, for example, a method of manually performing the separation by an operator, and a method of connecting a moving mechanism (not shown) to the movable mold 222 and controlling the operation thereof by the control unit.

The temperature of the plasticized material M1, that is, the temperature of the material M1 when supplied from the injection unit 21 to the mold clamping unit 22 is not particularly limited, but is higher than the phase transition point (temperature at which the form changes). For example, the temperature is preferably 180°C or more and 350°C or less, and more preferably 200°C or more and 340°C or less. Accordingly, the material M1 can be more effectively plasticized, and the material M1 can be more favorably and more smoothly supplied into the cavity 223.

The cooling temperature of the molded body M2, that is, the temperature when the molded body M2 is taken out from the mold clamping unit 22 is not particularly limited, but is lower than the phase transition point. For example, the temperature is preferably 50°C or more and 250°C or less, and more preferably 70°C or more and 200°C or less. Accordingly, the heat resistance and strength of the molded body M2 can be more effectively enhanced.

Cooling of the molded body M2 may be omitted. That is, after the molded body M2 is molded, the treatment step may be performed by immediately conveying the mold clamping unit 22 to the heat-retaining chamber 4 while keeping the molded body M2 in the mold clamping unit 22.

### [1- 2] Material M1

The material M1 contains the cellulose derivative.

The cellulose derivative is a compound that can be derived from cellulose by a chemical reaction. The cellulose derivative is lightweight, has excellent strength, has excellent biocompatibility, has excellent degradability, and is environmentally friendly.

Examples of the cellulose derivative include cellulose ethers, cellulose esters, and alkali metal salts thereof, such as a sodium salt and a potassium salt, and ammonium salts thereof. Among them, cellulose ester is preferable.

Examples of the cellulose ethers include one or more selected from carboxymethyl cellulose, carboxyethyl cellulose, carboxymethyl ethyl cellulose, and sodium salts and potassium salts thereof, hydroxymethyl cellulose, hydroxyethyl cellulose, hydroxypropyl cellulose, methyl cellulose, ethyl cellulose, methoxymethyl cellulose, benzyl cellulose, and mixtures and copolymers thereof.

Examples of the cellulose esters include organic acid esters such as cellulose acetate, cellulose propionate, and cellulose butyrate; mixed esters such as cellulose acetate propionate and cellulose acetate butyrate; grafted products such as polycaprolactone-grafted cellulose acetate; and inorganic acid esters such as cellulose nitrate, cellulose sulfate, and cellulose phosphate.

A cellulose ester having an acyl substitution degree of 2.7 or less is also referred to as an incompletely substituted cellulose ester. The incompletely substituted cellulose ester is more preferably used as the material M1 than a cellulose ester having an acyl substitution degree of more than 2.7. This makes it possible to even more effectively enhance the heat resistance and strength of the molded body M2 when it is subjected to a treatment step described later.

The degree of polymerization (viscosity-average degree of polymerization) of the cellulose ester is not particularly limited, and is, for example, preferably 200 or more and 400 or less, and more preferably 210 or more and 390 or less. This makes it possible to more effectively enhance the heat resistance and strength of the molded body M2 when it is subjected to the treatment step described later.

The average molecular weight of the cellulose derivative is preferably 1000 or more and 1000000 or less, and more preferably 5000 or more and 100000 or less. This makes it possible to more effectively enhance the heat resistance and strength of the molded product M3 when it is subjected to the treatment step described later.

The average molecular weight can be measured by a GPC method (gel permeation chromatography) using polyethylene oxide as a standard.

The content of the cellulose derivative in the material M1 is not particularly limited, but is, for example, preferably 80% by mass or more and 100% by mass or less, and more preferably 90% by mass or more and 99% by mass or less. Accordingly, the content of the cellulose derivative can be sufficiently ensured.

In addition to the cellulose derivative, the material M1 may contain other components, for example, non-substituted cellulose (unreacted cellulose) as described above, a plasticizer, a flame retardant, and the like.

The content of the other components in the material M1 is not particularly limited, but is, for example, preferably 0% by mass or more and 20% by mass or less, and more preferably 1% by mass or more and 10% by mass or less. Accordingly, the content of the cellulose derivative can be sufficiently ensured.

### [1- 3] Molded body M2

The shape of the molded body M2 is not particularly limited. The molded body M2 referred to in the present application is obtained by molding the material M1 after dissolution.

### [2] Conveying unit and conveying step

As shown in FIG. 1, the conveying unit 3 has a function of conveying the molded body M2 taken out from the mold clamping unit 22 to the heat-retaining chamber 4. Examples of the conveying unit 3 include a robot having a hand, a configuration having a conveying belt, and a combination thereof. Further, the mold clamping unit 22 may be removed from the injection unit 21 in its entirety, and the mold clamping unit 22 containing the molded body M2 may be conveyed. The conveying unit 3 is electrically coupled to the control unit (not shown) and the operation thereof is controlled. During this conveyance, the molded body M2 may be cooled to room temperature, or may be conveyed while being maintained at a temperature equal to or higher than the temperature maintained in the heat-retaining chamber 4.

The conveying unit 3 may be omitted. For example, the operator manually takes out the molded body M2 from the mold clamping unit 22, conveys the molded body M2 to the heat-retaining chamber 4, and carries the molded body M2 into a chamber 41 described later. Alternatively, the treatment step described later may be performed in the mold clamping unit 22 that is attached to the injection unit 21.

### [3] Heat-retaining chamber and treatment step

As shown in FIG. 1, the heat-retaining chamber 4 is a portion that executes a treatment step (second step) of performing a treatment in which the molded body M2 molded by the molding unit 2 is maintained at a temperature T (°C) for a time t (seconds). It can be said that the heat-retaining chamber 4 performs temperature control on the molded body M2 molded by the molding unit 2 so as to maintain a state in which the molded body M2 is kept at a temperature T (°C) for a time t (seconds). As a result, the molded product M3 (secondary molded body) can be obtained.

The temperature may remain unchanged during the treatment step, or may be changed during the treatment step as described later.

The heat-retaining chamber 4 includes the chamber 41 and a heater 42. The chamber 41 has a door 411, through which the molded body M2 is carried in and out by opening the door 411. The heater 42 is provided in the chamber 41 and has a function of heating the inside of the chamber 41. Accordingly, the heater 42 can heat the molded body M2 in the chamber 41. The heater 42 has a thermometer for measuring the temperature in the heat-retaining chamber 4, and is electrically coupled to the control unit (not shown) to control the operation thereof.

The temperature in the treatment performed by the heat-retaining chamber 4, that is, the temperature T (°C) (first temperature T1 (°C)), is A-10°C or more and A+50°C or less when the phase transition point Tg of the molded body M2 is A (°C). This can improve the heat resistance and strength (impact resistance) of the molded product M3. That is, it is possible to obtain the molded product M3 of the cellulose derivative which is environmentally friendly and has high heat resistance and strength through the treatment by the heat-retaining chamber 4.

More specifically, when the molded body M2 has a phase transition point Tg of 110°C, the temperature T (°C) (first temperature T1 (°C)) is preferably 100°C or more and 160°C or less. Accordingly, the molded product M3 of the cellulose derivative having excellent heat resistance and strength can be obtained.

The time for treating the molded body M2, that is, the time t (seconds) for maintaining the molded body M2 at the first temperature T1 (°C), is preferably a duration longer than the time corresponding to the endothermic peak of the molded body M2 in the treatment step. Since exceeding the endothermic peak of the molded body M2 indicates that its denaturation is promoted, the heat resistance and strength of the molded product M3 can be more effectively enhanced in the treatment.

The time t (seconds) (first time t1 (seconds)) may be a duration at which the heat absorption amount of the molded body M2 becomes 0.0001 W/g or less,
or may be a duration at which the heat absorption amount becomes 0.00005 W/g or less in the treatment in the treatment step. In this treatment, the heat resistance and strength of the molded product M3 can be more effectively enhanced.

FIG. 2 is a graph showing a temporal change of heat absorption of the molded body M2 having a phase transition point Tg of 110°C. In the graph shown in FIG. 2, the horizontal axis represents time, and the vertical axis represents heat absorption amount (W/g).

When the temperature T (°C) (first temperature T1 (°C)) is 100°C, the endothermic peak is reached at a time t (seconds) of about 400 seconds, and the heat absorption amount becomes substantially 0 at a time t (seconds) (first time t1 (seconds)) of about 600 seconds.

When the temperature T (°C) (first temperature T1 (°C)) is 110°C, the endothermic peak is reached at a time t (seconds) of about 400 seconds, and the heat absorption amount becomes substantially 0 at a time t (seconds) (first time t1 (seconds)) of about 600 seconds.

When the temperature T (°C) (first temperature T1 (°C)) is 120°C, the endothermic peak is reached when the time t (seconds) is about 200 seconds, and the heat absorption amount is substantially 0 when the time t (seconds) (first time t1 (seconds)) is about 500 seconds.

When the temperature T (°C) (first temperature T1 (°C)) is 130°C, the endothermic peak is reached when the time t (seconds) is about 1000 seconds, and the heat absorption amount is substantially 0 when the time t (seconds) (first time t1 (seconds)) is about 2800 seconds.

When the temperature T (°C) (first temperature T1 (°C)) is 140°C, the endothermic peak is reached at a time t (seconds) of about 1200 seconds, and the heat absorption amount becomes substantially 0 at a time t (seconds) (first time t1 (seconds)) of about 1900 seconds.

When the temperature T (°C) (first temperature T1 (°C)) is 150°C, the endothermic peak is reached at a time t (seconds) of about 700 seconds, and the heat absorption amount becomes substantially 0 at a time t (seconds) (first time t1 (seconds)) of about 1500 seconds.

When the temperature T (°C) (first temperature T1 (°C)) is 160°C, the endothermic peak is reached at a time t (seconds) of about 1000 seconds, and the heat absorption amount becomes substantially 0 at a time t (seconds) (first time t1 (seconds)) of about 2100 seconds.

When the temperature T (°C) (first temperature T1 (°C)) is 170°C, the endothermic peak is reached at a time t (seconds) of about 200 seconds, and the heat absorption amount becomes substantially 0 at a time t (seconds) (first time t1 (seconds)) of about 1000 seconds.

When the temperature T (°C) (first temperature T1 (°C)) is 180°C, the endothermic peak is reached at a time t (seconds) of about 300 seconds, and the heat absorption amount becomes substantially 0 at a time t (seconds) (first time t1 (seconds)) of about 400 seconds.

The temporal change of the heat absorption amount as described above can be measured by differential scanning calorimetry (DSC).

Therefore, the time t (seconds) may be set according to the temperature T (°C). For example, the time t (seconds) may be 150 seconds or more and 3500 seconds or less, or 270 seconds or more and 1200 seconds or less. Accordingly, the treatment of the molded body M2 by the heat-retaining chamber 4 can be more effectively performed, and the heat resistance and strength of the molded product M3 can be more effectively enhanced.

The inside of the heat-retaining chamber 4 is not limited to being kept constant at the temperature T (°C) for the time t (seconds). The internal temperature of the heat-retaining chamber 4 may be changed within a range of A-10°C or more and A+50°C or less, or may be changed so as to intermittently deviate from the range of A-10°C or more and A+50°C or less and then fall back within the range of A-10°C or more and A+50°C or less. When the internal temperature of the heat-retaining chamber 4 is intermittently changed, the total accumulated time during which the temperature falls within a range of A-10°C or more and A+50°C or less is set to time t (seconds).

### [4] Molded product M3

The molded product M3 referred to in the present application is obtained by performing a treatment on the molded body M2 to enhance its heat resistance and strength. The molded product M3 referred to in the present application also includes a final product obtained by performing a treatment on the molded body M2, followed by post-treatment or assembly.

### [5] Control unit

Although not shown, the control unit includes a processor, a memory, and a communication unit. Examples of the processor include a CPU and an accelerator. The control unit executes a method of producing a molded product by controlling the operation of each unit described above. This will be described below with reference to FIG. 3. The control unit controls the operation of the heat-retaining chamber 4 to maintain the temperature T (°C) (first temperature T1 (°C)). Specifically, the control unit acquires the temperature in the heat-retaining chamber 4 from the heater 42, causes the heater 42 to perform heating when the temperature in the heat-retaining chamber 4 is about to fall below the temperature T (°C), and causes the heater 42 to stop heating when the temperature in the heat-retaining chamber 4 is about to exceed the temperature T (°C). Then, the control unit controls the operation of the molding unit 2 to perform injection molding of the material M1 (step S1). Next, the control unit controls the operations of the molding unit 2 and the conveying unit 3 to transfer the produced molded body M2 from the molding unit 2 to the conveying unit 3 (step S2). Then, the control unit causes the door 411 of the heat-retaining chamber 4 to open (step S3). Next, the control unit controls the operation of the conveying unit 3 to cause the molded body M2 to be loaded into the heat-retaining chamber 4 through the opened door 411 (step S4). Thereafter, the control unit causes the door 411 of the heat-retaining chamber 4 to close (step S5). The control unit waits until the time t (seconds) elapses after the molded body M2 enters the heat-retaining chamber 4, and proceeds to step S7 when the time t (seconds) has elapsed (step S6: YES). Then, the control unit causes the door 411 of the heat-retaining chamber 4 to open (step S7). Next, the control unit controls the operation of the conveying unit 3 to cause the molded product M3 to be taken out of the heat-retaining chamber 4 through the opened door 411 (step S8). Thereafter, the control unit causes the door 411 of the heat-retaining chamber 4 to close (step S9). Next, the control unit controls the operation of the conveying unit 3 to convey the taken-out molded product M3 to a finished product storage area and to cause it to be placed there (step S10). Note that, in step S10, the control unit may control the operation so as to perform post-processing or assembly of the molded body M2 taken out, as necessary, and may then cause the molded product M3 after the post-processing or the molded product M3 after the assembly to be placed in a finished product storage area.

### [6] Summary of the present embodiment

As described above, the method for producing the molded product includes: the first step of molding the material M1 containing the cellulose derivative into the molded body M2, and the second step of performing a treatment in which the molded product M3 is produced by maintaining the molded body M2 produced in the first step at the first temperature T1 for a time t (seconds), wherein, when the phase transition point Tg of the molded body M2 is A(°C), the first temperature T1 in the second step is A-10°C or more and A+50°C or less. Accordingly, it is possible to obtain the molded product M3 capable of exhibiting excellent heat resistance and strength. That is, it is possible to obtain the molded product M3 which is environmentally friendly and has high heat resistance and strength through the treatment by the heat-retaining chamber 4.

In the present embodiment, the case where the second step is performed in the heat-retaining chamber 4 has been described, but the present disclosure is not limited thereto, and the second step may be performed at any location. For example, the heat-retaining chamber 4 may be omitted, and the second step may be performed in a state where the injection molding has been performed. That is, the second step may be performed in the mold clamping unit 22.

The time t is preferably a duration longer than the time corresponding to the endothermic peak of the molded body M2 in the treatment of the second step. Accordingly, the heat resistance and strength of the molded body M2 can be more effectively enhanced.

The time t is preferably a duration at which the heat absorption amount of the molded body M2 becomes 0 in the treatment in the second step. Accordingly, the heat resistance and strength of the molded body M2 can be more effectively enhanced.

The time t is preferably 150 seconds or more and 3500 seconds or less. Accordingly, the heat resistance and strength of the molded body M2 can be more effectively enhanced.

The cellulose derivative is preferably a cellulose ester. Accordingly, the heat resistance and strength of the molded body M2 can be more effectively enhanced.

The cellulose derivative is preferably the incompletely substituted cellulose ester. Accordingly, the heat resistance and strength of the molded body M2 can be more effectively enhanced.

The manufacturing system includes the molding unit 2, which is a molding machine that molds the material M1 containing the cellulose derivative into the molded body M2; the heat-retaining chamber 4 that performs a treatment of maintaining the molded body M2 molded by the molding unit 2 at the first temperature T1 (°C) for a time t (seconds); and the conveying unit 3, which is a conveying machine that conveys the molded body M2 from the molding unit 2 to the heat-retaining chamber 4, wherein, when the phase transition point Tg of the molded body M2 is A (°C), the first temperature T1 (°C) is A-10°C or more and A+50°C or less. Accordingly, the molded body M2 can exhibit excellent characteristics. That is, by undergoing the treatment in the heat-retaining chamber 4, it can be made environmentally friendly, and the heat resistance and strength of the molded product M3 can be sufficiently enhanced.

As described above, while the present disclosure has been described with reference to the preferred embodiment of the present disclosure, the present disclosure is not limited thereto.

For example, the molded body M2 taken out from the heat-retaining chamber 4 may be cooled.

### Examples

Next, specific examples of the present disclosure will be described.

### [7] Preparation of raw materials

In order to manufacture a material M1, the following materials were prepared.
Cellulose (KC Flock, W-50GK, manufactured by Nippon Paper Industries Co., Ltd.)
Acetic acid: (manufactured by FUJIFILM Wako Pure Chemical Corporation (acetic acid))
Propionic anhydride: (manufactured by FUJIFILM Wako Pure Chemical Corporation (propionic anhydride))
Stearic acid: (manufactured by FUJIFILM Wako Pure Chemical Corporation (stearic acid))
Perchloric acid (manufactured by FUJIFILM Wako Pure Chemical Corporation (perchloric acid)
1,4 -dioxane (manufactured by FUJIFILM Wako Pure Chemical Corporation (1,4 - dioxane))
Methanol (manufactured by FUJIFILM Wako Pure Chemical Corporation (methanol))
Isopropyl alcohol (manufactured by FUJIFILM Wako Pure Chemical Corporation (isopropyl alcohol))

### [8] Manufacture of Molded Body Using Raw Materials

### Example 1

First, 5.0 g of stearic acid and 5.0 mL of propionic anhydride were charged into a three-necked flask and reacted at 100°C for 1 hour under a nitrogen atmosphere, thereby synthesizing an acid anhydride of stearic acid and propionic acid. Then, 100 mL of 1,4 -dioxane was added thereto, the temperature of the reaction solution was lowered to 50°C, and then a mixed solution of cellulose activated with acetic acid, 120 µL of perchloric acid, and 50 mL of 1,4 - dioxane was subsequently added, followed by stirring at 50°C. After 2 hours, the reaction solution was transferred from the three-necked flask to a beaker, and 1.5 L of a methanol/water mixed solution (methanol: water = 1:1 vol) as a poor solvent was added dropwise to stop the reaction. The solid precipitated by the dropwise addition was suction-filtered, and the filtrate was washed with isopropyl alcohol and further washed with water. Thereafter, the resultant was dried under reduced pressure at 100°C to obtain a cellulose derivative (material M1).

The material M1 obtained as described above was charged into a hopper 211 shown in FIG. 1, and the manufacturing system 1 was operated to manufacture a molded product M3.

The temperature of the material M1 when supplied from an injection unit 21 to a mold clamping unit 22 was set to 250°C.

The temperature of the molded body M2 when taken out from the mold clamping unit 22 was 200°C.

The phase transition point Tg of the molded body M2 was 110°C.

The temperature of the molded body M2 when carried into the heat-retaining chamber 4 was 90°C. The temperature T (°C) in the treatment performed by the heat-retaining chamber 4 was set to 100°C, and the time t (seconds) for maintaining the temperature T (°C) was set to 600 seconds (10 minutes).

The average enthalpy change per unit time of the molded body M2 during the treatment in the heat-retaining chamber 4 was 0.14 J/g.

Through such a treatment, the molded product M3 of Example 1 was obtained.

### Example 2

A molded product M3 of Example 2 was obtained in the same manner as in Example 1 except that the temperature T (°C) in the treatment performed by the heat-retaining chamber 4 was set to 110°C.

The average enthalpy change per unit time of the molded body M2 during the treatment in the heat-retaining chamber 4 was 0.13 J/g.

### Example 3

A molded product M3 of Example 3 was obtained in the same manner as in Example 1 except that the temperature T (°C) in the treatment performed by the heat-retaining chamber 4 was set to 120°C, and the time t (seconds) for maintaining the temperature T (°C) was set to 480 seconds (6 minutes).

The average enthalpy change per unit time of the molded body M2 during the treatment in the heat-retaining chamber 4 was 0.08 J/g.

### Example 4

A molded product M3 of Example 4 was obtained in the same manner as in Example 1 except that the temperature T (°C) in the treatment performed by the heat-retaining chamber 4 was set to 130°C, and the time t (seconds) for maintaining the temperature T (°C) was set to 2880 seconds (48 minutes).

The average enthalpy change per unit time of the molded body M2 during the treatment in the heat-retaining chamber 4 was 0.98 J/g.

### Example 5

A molded product M3 of Example 5 was obtained in the same manner as in Example 1 except that the temperature T (°C) in the treatment performed by the heat-retaining chamber 4 was set to 140°C, and the time t (seconds) for maintaining the temperature T (°C) was set to 1980 seconds (33 minutes).

The average enthalpy change per unit time of the molded body M2 during the treatment in the heat-retaining chamber 4 was 1.01 J/g.

### Example 6

A molded product M3 of Example 6 was obtained in the same manner as in Example 1 except that the temperature T (°C) in the treatment performed by the heat-retaining chamber 4 was set to 150°C, and the time t (seconds) for maintaining the temperature T (°C) was set to 1560 seconds (26 minutes).

The average enthalpy change per unit time of the molded body M2 during the treatment in the heat-retaining chamber 4 was 0.57 J/g.

### Example 7

A molded product M3 of Example 7 was obtained in the same manner as in Example 1 except that the temperature T (°C) in the treatment performed by the heat-retaining chamber 4 was set to 160°C, and the time t (seconds) for maintaining the temperature T (°C) was set to 2100 seconds (35 minutes).

The average enthalpy change per unit time of the molded body M2 during the treatment in the heat-retaining chamber 4 was 0.74 J/g.

### Example 8

A molded product M3 of Example 8 was obtained in the same manner as in Example 1 except that the temperature T (°C) in the treatment performed by the heat-retaining chamber 4 was set to 140°C, and the time t (seconds) for maintaining the temperature T (°C) was set to 1200 seconds (20 minutes).

The average enthalpy change per unit time of the molded body M2 during the treatment in the heat-retaining chamber 4 was 0.60 J/g.

### Example 9

A molded product M3 of Example 9 was obtained in the same manner as in Example 1 except that a first temperature T1 (°C) in the treatment performed by the heat-retaining chamber 4 was set to 140°C, the time t1 (seconds) for maintaining the first temperature T1 (°C) was set to 2400 seconds (40 minutes), a second temperature T2 (°C) was set to 120°C, and the time t2 (seconds) for maintaining the second temperature T2 (°C) was set to 900 seconds (15 minutes).

The average enthalpy change per unit time of the molded body M2 during the treatment in the heat-retaining chamber 4 was 1.00 J/g.

### Example 10

A molded product M3 of Example 10 was obtained in the same manner as in Example 1 except that the first temperature T1 (°C) in the treatment performed by the heat-retaining chamber 4 was set to 140°C, the time t1 (seconds) for maintaining the first temperature T1 (°C) was set to 900 seconds (15 minutes), the second temperature T2 (°C) was set to 120°C, and the time t2 (seconds) for maintaining the second temperature T2 (°C) was set to 1800 seconds (30 minutes).

The average enthalpy change per unit time of the molded body M2 during the treatment in the heat-retaining chamber 4 was 0.60 J/g.

### Example 11

A molded product M3 of Example 11 was obtained in the same manner as in Example 1 except that the first temperature T1 (°C) in the treatment performed by the heat-retaining chamber 4 was set to 140°C, the time t1 (seconds) for maintaining the first temperature T1 (°C) was set to 900 seconds (15 minutes), the second temperature T2 (°C) was set to 150°C, and the time t2 (seconds) for maintaining the second temperature T2 (°C) was set to 1200 seconds (20 minutes).

The average enthalpy change per unit time of the molded body M2 during the treatment in the heat-retaining chamber 4 was 0.90 J/g.

### Comparative Example 1

A molded product M3 of Comparative Example 1 was obtained in the same manner as in Example 1 except that the temperature T (°C) in the treatment performed by the heat-retaining chamber 4 was set to 170°C, and the time t (seconds) for maintaining the temperature T (°C) was set to 1140 seconds (19 minutes).

The average enthalpy change per unit time of the molded body M2 during the treatment in the heat-retaining chamber 4 was 0.13 J/g.

### Comparative Example 2

A molded product M3 of Comparative Example 2 was obtained in the same manner as in Example 1 except that the temperature T (°C) in the treatment performed by the heat-retaining chamber 4 was set to 180°C, and the time t (seconds) for maintaining the temperature T (°C) was set to 480 seconds (8 minutes).

The average enthalpy change per unit time of the molded body M2 during the treatment in the heat-retaining chamber 4 was 0.14 J/g.

### Comparative Example 3

A molded product M3 of Comparative Example 3 was obtained in the same manner as in Example 1 except that the first temperature T1 (°C) in the treatment performed by the heat-retaining chamber 4 was set to 140°C, the time t1 (seconds) for maintaining the first temperature T1 (°C) was set to 2400 seconds (40 minutes), the second temperature T2 (°C) was set to 170°C, and the time t2 (seconds) for maintaining the second temperature T2 (°C) was set to 1200 seconds (20 minutes).

The average enthalpy change per unit time of the molded body M2 during the treatment in the heat-retaining chamber 4 was 0.13 J/g.

### [9] Evaluation

The molded bodies manufactured by the methods for producing the molded products according to the respective Examples and Comparative Examples were evaluated as follows.

### [9- 1] Evaluation of Heat Resistance

Measurement was performed in accordance with JIS K 7191-2, and evaluation was performed according to the following criteria.
Very good: 100°C or more and 150°C or less
Good: 80°C or more and less than 100°C
Poor: 50°C or more and less than 80°C

### [9- 2] Strength (Impact Resistance) Evaluation

Measurement was performed in accordance with JIS K 711-1, and evaluation was performed according to the following criteria.
Very good: 10 kJ/m² or more and 20 kJ/m² or less
Good: 8 kJ/m² or more and less than 10 kJ/m²
Poor: 2 kJ/m² or more and less than 8 kJ/m²

### [10] Comprehensive Evaluation

As shown in Table 1 in FIG. 4, in Examples 1 to 11, when the phase transition point of the molded body is A (°C), the first temperature T1 (°C) in the second step satisfies the requirement of being A-10°C or more and A+50°C or less, and thus the obtained molded body can exhibit excellent heat resistance and durability.

In contrast, in Comparative Examples 1 and 2, when the phase transition point of the molded body is A (°C), the first temperature T1 (°C) in the second step does not satisfy the requirement of being A-10°C or more and A+50°C or less, and thus the obtained molded body cannot exhibit excellent heat resistance and durability.

Similarly, the same results were obtained when the material of the molded body M2 was replaced with another type of cellulose derivative.

## Claims

1. A method for producing a molded product comprising:
molding a material containing a cellulose derivative into a molded body, and
performing temperature control on the molded body produced by the molding within a predetermined temperature range for a predetermined time t,
wherein, when the phase transition point of the molded body is A (°C), the temperature range is from A-10°C to A+50°C.

2. The method for producing the molded product according to claim 1, wherein the time t is a duration longer than the time corresponding to the endothermic peak of the molded body.

3. The method for producing the molded product according to claim 1, wherein the time t is a duration at which the heat absorption amount of the molded body is 0.0001 W/g or less.

4. The method for producing a molded product according to claim 1, wherein the time t is 150 seconds or more and 3500 seconds or less.

5. The method for producing a molded product according to claim 1, wherein the temperature control includes controlling a heater that heats the molded body so that the molded body maintains the temperature range.

6. The method for producing a molded product according to claim 1, comprising initiating cooling of the molded body after the temperature control.

7. A manufacturing system comprising:
a molding machine configured to mold a material containing a cellulose derivative into a molded body, and
a heat-retaining chamber configured to perform temperature control on the molded body molded by the molding unit by maintaining the molded body within a predetermined temperature range for a predetermined time t,
wherein, when the phase transition point of the molded body is A (°C), the temperature range is A-10°C or more and A+50°C or less.
